## Europäisches Patentamt

## European Patent Office

## Office européen des brevets

(19)

(11) Publication number: **0 030 153**
**B1**

(12)

# EUROPEAN PATENT SPECIFICATION

(45) Date of publication of patent specification: **20.06.84**

(51) Int. Cl.³: **A 61 J 3/06,** A 61 J 3/00, B 01 J 2/00, A 23 G 3/26

(21) Application number: **80304315.7**

(22) Date of filing: **01.12.80**

(54) Tablet coating apparatus.

(30) Priority: **03.12.79 GB 7941617**

(43) Date of publication of application:
**10.06.81 Bulletin 81/23**

(45) Publication of the grant of the patent:
**20.06.84 Bulletin 84/25**

(84) Designated Contracting States:
**AT BE CH DE FR GB IT LI LU NL SE**

(56) References cited:
**FR - A - 2 278 316**
**GB - A - 1 203 213**
**US - A - 3 448 718**
**US - A - 4 129 666**

(73) Proprietor: **Lilly Industries Limited**
**Lilly House Hanover Square**
**London W1R 0PA (GB)**

(72) Inventor: **Message, Stephen Roy**
**45, Starpost Road**
**Camberley Surrey GU15 4DE (GB)**

(74) Representative: **Hudson, Christopher Mark et al,**
**Erl Wood Manor**
**Windlesham Surrey GU20, 6PH (GB)**

Courier Press, Leamington Spa, England.

## Description

This invention relates to a tablet coating apparatus and more particularly to a tablet coating apparatus of the type in which, during operation, air passes through a bed of tablets on a rotating surface.

In addition to use for film-coating pharmaceutical tablets, such tablet coating apparatuses are frequently used for coating capsules and granules and may also be used for coating confectionery and other materials in similar physical form. Accordingly as used herein the general term "tablets" is defined as embracing pharmaceutical tablets and other materials in similar physical form, such as capsules, granules and confectionery.

One widely used apparatus comprises a rotatable surface in the form of a rotatable pan and comprises a spray gun and an air conduit placed so that, in operation, a jet of air plays through the bed of tablets, the air either issuing directly above the surface of the tablets or within the tablet bed itself and the exhaust air which has passed between the tablets, being allowed to escape from the apparatus. The air conduit can, for example, be in the form of a perforated probe which is immersed in the bed of tablets.

In another version of tablet coating apparatus, air from an inlet conduit passes through a bed of tablets in a rotating drum, the exhaust air passing out of the drum through an exhaust conduit. One such apparatus is described in U.S. Patent No. 3,601,086 and U.K. Patent Specification No. 1,195,527, and sold by Manesty Machines Limited under the name "Accela-Cota" (trade mark), in which a drum having a perforated cylindrical surface is mounted for rotation within an enclosing cabinet. An inlet air duct to the cabinet enables inlet air to pass into the drum via the cabinet and the perforations in the cylindrical surface. A stationary exhaust conduit has its inlet in sliding contact with the perforated cylindrical surface of the drum in the region over which tablets in the drum form a bed when the drum is rotated, to enable air to be drawn into the exhaust conduit through the bed of tablets.

Another kind of tablet coating apparatus is described in U.S. Patent No. 3,834,347, and sold by Freund Industrial Company Limited and Matsuzaka Company Limited under the name "Hi Coater" (trade mark). In this apparatus an air inlet conduit carries inlet air directly to the drum. The drum has a plurality of discrete perforated areas in its cylindrical surface, each of which areas is covered by a suction duct which is adapted to be in communication with a stationary exhaust air conduit disposed at one side of the drum whenever the perforated area is covered by the bed of tablets during rotation of the drum, in operation of the apparatus. Air thus passes from the air inlet conduit through the bed of tablets to the exhaust air conduit via one of the perforated areas and its associated suction duct.

A further form of apparatus is made by Driam Metallprodukt GmbH & Co. KG and sold under the name "Driacoater" (trade mark). This form of apparatus has a plurality of perforated air ducts on the surface of the drum, each of which is arranged to be in communication with a stationary air inlet conduit disposed at one side of the drum whenever the perforations on the air duct are covered by the bed of tablets during rotation of the drum, in operation of the apparatus. Air passes from the air inlet conduit to a stationary exhaust air conduit which is coaxial with the axis of rotation of the drum through the bed of tablets via the perforations of one of the perforated air ducts. This form of apparatus enables the tablets to form a fluidised bed in operation of the apparatus.

In all of the above forms of apparatus, means such as fans are employed to pass air to the rotating surface and a heater is provided for heating inlet air in order to enhance the drying of the tablets being sprayed.

Whilst the apparatus of the above type is functioning perfectly it enables high quality coated products to be obtained. However malfunction of the apparatus can result in the tablets becoming too wet or too dry and being damaged by for example abrasion. Hitherto reliance has usually been placed on the machine operator's powers of observation in order to monitor progress of the coating operation. The operator must also detect machine malfunction and switch off the machine before damage to the tablets has occurred.

Use has been made in some cases of air-flow meters to detect malfunction resulting in cessation of satisfactory passage of air through the tablets, but air-flow meters are not capable of detecting, for example, malfunction of the applicator.

In further apparatuses of this type temperature sensing devices have been employed to control the coating or treatment of tablets or similar materials as for example described in U.S. Patent 3 448 718 and French Patent 2 278 316.

The object of the invention is to provide a tablet coating apparatus which includes means for monitoring the operation of the apparatus and thus avoiding damage to tablets as a result of apparatus malfunctions.

According to the present invention there is provided an apparatus for coating tablets and other materials in similar physical form comprising a rotatable tablet receiving surface, rotary driving means (3, 4) coupled to the tablet receiving surface, an applicator (17) for supply of coating fluid to the tablets, applicator shutdown means (21, 22, 23), an air conduit (2, 9) for supplying air to the tablets, air control means (11, 12) for regulating the supply of air, the arrangement of the air conduit and tablet receiving surface being such that in operation of the apparatus air passes from the air conduit through a bed of tablets (16) on the tablet receiving surface, temperature sensing means (25) in the path of the exhaust air and control means (26) connected to the temperature sensing means, the rotary driving means, the air contol means and the applicator shutdown means, for shutting off the supply of air to the rotatable tablet receiving surface, causing the rotary driving means to cease to rotate the tablet receiving surface and causing the applicator shutdown means to shut down the applicator whenever the temperature detected by the temperature sensing means exceeds a first predetermined value in operation of the apparatus and for causing the applicator shutdown means to shut down the applicator whenever the temperature detected by the temperature sensing means falls below a second predetermined value in operation of the apparatus.

The rotatable tablet receiving surface can be, for example, a drum or pan of open or enclosed form. The applicator is preferably in the form of a spray gun for spraying the tablets with coating fluid, and, if desired, there may be more than one.

Preferably the apparatus comprises an air inlet conduit for supply of air and an exhaust air conduit, the arrangement being such that air passes from the air inlet to the exhaust air conduit through a bed of tablets on the rotatable tablet receiving surface. The air inlet conduit and exhaust air conduit are associated, respectively, with an inlet air control means for regulating the supply of air and an exhauster for withdrawing exhaust air through the exhaust air conduit. Usually there is only one air inlet conduit but if desired two or more can be employed.

Thus a preferred tablet coating apparatus comprises a rotatable tablet receiving drum, rotary driving means coupled to the drum, at least one spray gun mounted for spraying tablets (as hereinbefore defined) within the drum, spray gun shutdown means, an air inlet conduit for supplying air to the drum, inlet air control means for regulating the supply of air to the drum, an exhaust air conduit, an exhauster for withdrawing exhaust air from the drum through the exhaust air conduit, the arrangement of the air inlet conduit, the exhaust air conduit and the drum being such that in operation of the apparatus air passes from the air inlet conduit to the exhaust air conduit through a bed of tablets within the drum, temperature sensing means associated with the exhaust air conduit, and control means connected to the temperature sensing means, the rotary driving means, the air inlet control means and the spray gun shutdown means, for shutting off the supply of air to the drum, causing the rotary driving means to cease to rotate the drum and causing the spray gun shutdown means to shut down the or each spray gun whenever the temperature detected by the temperature sensing means exceeds a first predetermined value in operation of the apparatus and for causing the spray gun shutdown means to shut down the or each spray gun whenever the temperature detected by the temperature sensing means falls below a second predetermined value in operation of the apparatus.

Although the temperature sensing means may comprise two temperature sensors, one being used to detect when the temperature exceeds the first predetermined value and the other being used to detect when the temperature falls below the second predetermined value, a single temperature sensor may advantageously be used to perform both detection functions. The preferred form of temperature sensor is a thermistor since thermistors are robust, consistent and have relatively fast response to temperature variations.

Tablet coating apparatus in accordance with the invention conveniently further includes first audio-visual warning means coupled to the said control means for indicating by warning light and audible alarm, such as a bell or buzzer, whenever the temperature detected by the temperature sensing means exceeds the first predetermined value, and second audio-visual warning means coupled to the control means for indicating by warning light and audible alarm whenever the temperature detected by the temperature sensing means falls below the second predetermined value.

The present invention will be further understood from the following detailed description of a preferred embodiment thereof, which is made, by way of example only, with reference to the accompanying illustrative drawings, in which:—

Figure 1 is a schematic part-sectional diagram of a tablet coating apparatus in accordance with the invention,

Figure 2 is a schematic part-sectional perspective view of a part of the apparatus of Figure 1, and

Figure 3 is a circuit diagram of the control means employed in the apparatus of Figure 1.

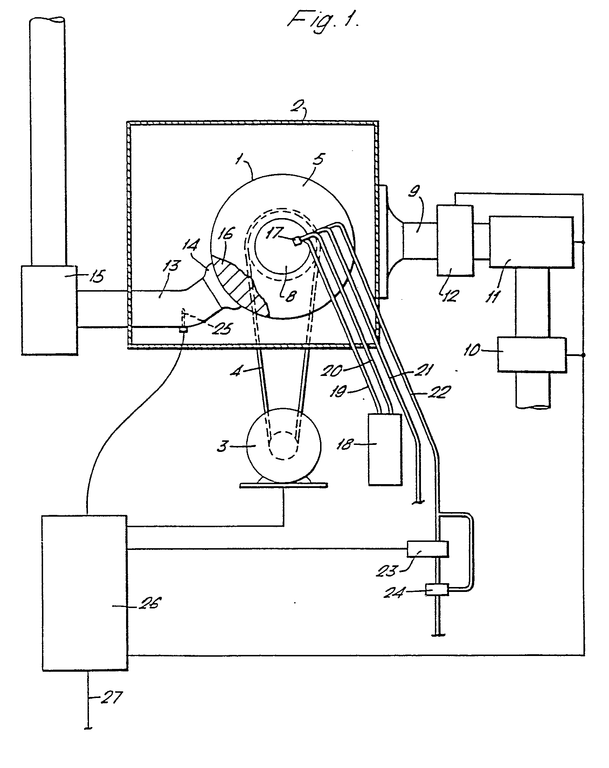

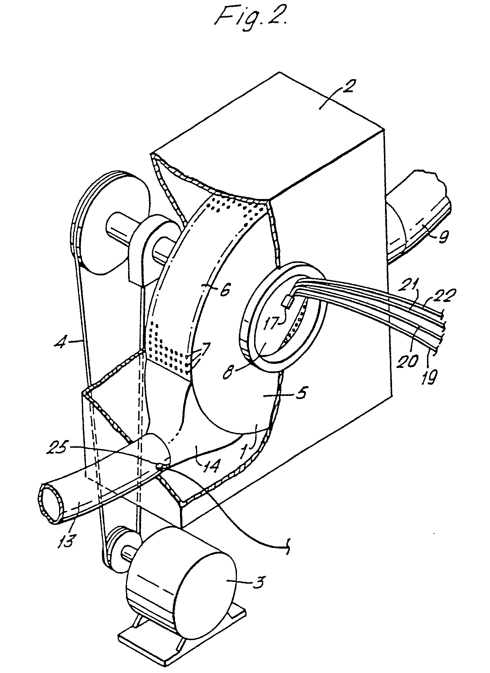

Referring to Figures 1 and 2 of the drawings, there is shown an apparatus of the type described in U.S. Patent No. 3,601,086 or U.K. Patent Specification No. 1,195,527 modified according to this invention.

The apparatus comprises a rotatable tablet receiving drum 1 which is mounted in an enclosed cabinet 2 for rotation by an electrical motor 3 which constitutes rotary driving means coupled to the drum 1 via conventional drive belt and sprocket means 4. The drum 1 has side walls 5 connected by a cylindrical wall 6. The cylindrical wall 6 is provided with a series of apertures 7. In the drawings only one of the side walls 5 is shown and this side wall is formed with a circular opening 8 which is coaxial with the axis of rotation of the drum 1. Tablets are loaded into and unloaded from the drum through the circular opening 8 which may be closed by a perspex member (not shown) to permit of observation of the interior of the drum 1 during operation of the apparatus.

Connected to and opening into the cabinet 2 is an air duct 9 which has connected into it a heater 10, a fan 11 and damper means 12. The cabinet 2 and air duct 9 together constitute an air inlet conduit for supplying air to the interior of the drum 1 via the apertures 7. The fan 11 enables air to be drawn in through the heater 10 and passed into the cabinet 2 through the damper means 12. The damper means 12 can be adjusted to vary the rate of flow of air through the air duct 9 and can shut off completely the flow of air to the cabinet 2. The fan 11 has switching means (not shown) associated with it to enable it to be switched "on" and "off" so as to cause air to flow to the damper means 12 or to cause no air to flow.

The damper means 12 and the fan 11 and its associated switching means together constitute inlet air control means for regulating the supply of air to the drum. This is a preferred arrangement, but it will be appreciated that, if no damper means 12 were provided in the duct 9, the fan 11 and its associated switching means alone would constitute the inlet air control means. Alternatively, if the fan 11 did not have the associated switching means, the damper means 12 alone would constitute the inlet air control means.

An exhaust air conduit 13 having an exhaust inlet 14 which is in sliding contact with the cylindrical wall 6 of the drum 1 extends from the drum 1 out through the cabinet 2 and has connected into it an exhauster 15. The exhauster 15 is preferably a fan similar to the fan 11 in the air duct 9.

When tablets are loaded into the drum 1 and the drum 1 is rotated by means of the electrical motor 3, the tablets tumble within the drum 1. The drum 1 is rotated at a relatively low speed, e.g. 10 to 30 revolutions per minute so that no significant centrifugal force is exerted on the tablets. The tumbling tablets tend therefore to form a bed of tablets 16 which remains substantially within the leading lower quadrant of the drum 1 in the direction of rotation of the drum 1, which is clockwise as viewed in Figure 1.

The situation of the exhaust inlet 14 relative to the drum 1 is such that in operation of the apparatus air is drawn into the exhaust air conduit 13 by the exhauster 15 through the bed of tablets 16.

A spray gun 17 is mounted within the drum 1 on a support (not shown) which extends into the drum 1 through the opening 8. The spray gun 17 is conveniently a Walther pilot spray gun Model WAXV/U (or for 36 inch, 48 inch and 60 inch models of "Accela-Cota", several guns of Model WAXV may be used) made by Richard C. Walther K.G. coating fluid is supplied to the spray gun 17 from a reservoir 18 via supply and return lines 19 and 20. Compressed air is supplied to the spray gun 17 via a supply air line 21. The spray gun 17 is switched "on" and "off" by means of an air-controlled needle valve (not shown) within the spray gun 17. Compressed air is supplied to the needle valve through a control air line 22. The control air line 22 incorporates a solenoid-actuated on-off valve 23 by means of which the supply of air to the needle valve may be switched on and off. The control air line 22 may also incorporate a three-way manual control valve 24 to enable manual shutdown of the spray gun 17 and manual by-pass of the soleniod-actuated on-off valve 23 for use in setting up spray conditions initially, if desired.

The reservoir 18, the supply and return lines 19 and 20, and the supply air line 21 and the control air line 22 are monitored by a monitor unit which is not shown but which is commercially available unit made by Rexson Pumps (U.K.) Limited, Co Tab Model RP MM/103 incorporating a pump which is Model 902503. The monitor unit ensures that spray solution and compressed air are supplied to the spray gun 17 at correct pressures.

Associated with the exhaust air conduit 13 is temperature sensing means in the form of a thermistor 25, conveniently a Radiospares Thermistor Probe 151—120. The thermistor 25 is mounted so that it protrudes within the exhaust air conduit 13 in order to be subject as quickly as possible to any variations in temperature of air passing through the exhaust air conduit 13.

The thermistor 25 is electrically connected to control means 26. The control means 26 is also electrically connected to the motor 3, the heater 10, the fan 11, the damper means 12 and the solenoid-actuated on-off valve 23. Power is supplied to the control means 26 via a supply cable 27 from a supply (not shown) e.g. mains electricity supply.

In operation of the apparatus, tablets are loaded into the drum 1, the drum 1 is rotated by means of the motor 3, air is supplied to the drum 1 through the duct 9 via heater 10, fan 11 and damper means 12 and is extracted through the exhaust air conduit 13 via exhauster 15, and the tablets are sprayed by means of the spray gun 17 with a solution of a film forming agent. The film forming agent, which may for example be a modified cellulose, vinyl or acrylate film former, is dissolved in water or an organic solvent, or a mixture of solvents.

If too little spray solution is applied to the tablets abrasions may result, and if too much spray solution is applied tablets are liable to adhere together.

It has been found that the temperature of the exhaust air as measured by the thermistor 25 is substantially constant under normal operation of the apparatus, and that for satisfactory coating it only varies between first and second values which are respectively of the order of 2.5°C above and below a mean coating temperature. However the practical limits of these first and second values will vary according to the physical nature of the tablets and can readily be determined by routine experiment.

The mean coating temperature usually falls within the range 30°C to 60°C, depending on the nature of the spray solution, and is determined experimentally for the specific types of tablet and spray solution being used. The experimental determination is conveniently made by varying spraying rate until the tablets are observed to be being coated uniformly, and the temperature of the exhaust air passing the thermistor 25 is noted. First and second values which are respectively within 2.5°C, preferably 2°C, above and below the mean coating temperature are then set on the control means 26. These values are the first and second predetermined values referred to hereafter.

A typical coating operation is completed in from 1 to 4 hours, and if the temperature of the exhaust air passing the thermistor 25 remains between the first and second predetermined values the control means 26 remains inactive.

If, however, the temperature of the exhaust air passing the thermistor 25 exceeds the first predetermined value, the control means 26 is operative to switch off the heater 10 and the fan 11 and to cause the damper means 12 to shut off the flow of air through the air duct 9 to the cabinet 2; to switch off the motor 3; and to actuate the solenoid-actuated on-off valve 23 to cause the air-controlled needle valve to switch off the spray gun 17.

Furthermore, if the temperature of the exhaust air passing the thermistor 25 falls below the second predetermined value, the control means 26 is operative to actuate the solenoid actuated on-off valve 23 to cause the air-controlled needle valve to switch off the spray gun 17.

In this way, whenever too little spray solution is reaching the tablets, the whole apparatus is effectively shut down, and if too much spray solution is being applied the spray gun is switched off.

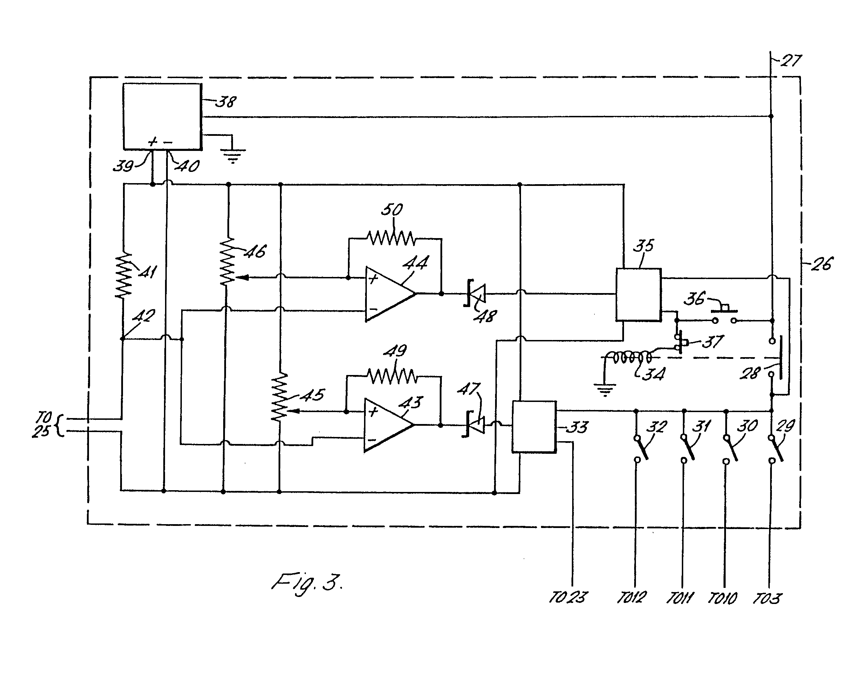

The control means 26 is a conventional type of circuit and can be of any design which will fulfil the requirements of operation outlined above. Suitable circuits will readily occur to the mind of a competent electrician. However, for the sake of a complete understanding of the preferred embodiment of the invention, the preferred control means 26 is illustrated in Figure 3 of the drawings.

Referring to Figure 3 of the drawings, mains electricity is supplied to the control means 26 via supply cable 27. The mains electricity from supply cable 27 is connected to the motor 3, the heater 10, the fan 11 and the damper means 12 through a mains contactor 28 and respective manual switches 29, 30, 31 and 32. The manual switches 29, 30, 31 and 32 enable selective manual switching off of the motor 3, the heater 10, the fan 11 or the damper means 12. The mains electricity from supply cable 27 is connected to the solenoid-actuated on-off valve 23 through the mains contactor 28 and a first relay 33.

The mains contactor 28 has an actuating coil 34 which is connected to the supply cable 27 via a second relay 35 and a normally open push-button switch 36, which are connected in parallel with one another, and via a normally closed push-button switch 37. It should be noted, however, that the mains electricity to the second relay 35 is supplied through the mains contactor 28. The switch 36 operates as a "start button" for the control means 26. When the switch 36 is closed, current flows through it, the switch 37 and the coil 34, which causes the mains contactor 28 to close and allows current to flow via the second relay 35, the switch 37 and the coil 34 to keep the mains contactor 28 closed when the switch 36 is released and opens again.

The switch 37 operates as a "stop button". When the switch 37 is opened, current ceases to flow through the coil 34 which becomes deenergised, allowing the mains contactor 28 to open.

The first and second relays 33 and 35 are conveniently 12 volt Radiospares transistorised relays.

In operation of the coating apparatus of Figures 1 and 2 of the drawings, supply of mains current to the motor 3, the heater 10, the fan 11, the damper means 12 and the solenoid-actuated on-off valve 23 is determined by the second relay 35, which is arranged so that when it is deenergised it allows current to flow through the coil 34 and thereby keeps the mains contactor 28 closed. Conversely, when the second relay 35 is energised, current does not flow through the coil 34 and the mains contactor 28 opens. Mains current is supplied to the solenoid-actuated on-off valve 23 via the first relay 33 when the first relay 33 is energised, and is stopped when the first relay 33 becomes deenergised.

The supply cable 27 is also connected to a transformer-rectifier unit 38 which produces a 12 volt direct current output at positive and negative output terminals 39 and 40.

The thermistor 25 is connected directly to the negative output terminal 40 and is connected to the positive output terminal 39 via a balancing resistor 41 which is conveniently a 2.2 Kilohm, $\frac{1}{2}$ watt thick film resistor and is chosen so that the junction point 42 between the resistor 41 and the thermistor 25 will be of the order of 6 volts above the negative terminal 40. This voltage will, of course vary according to the resistance of the thermistor 25 which is dependent upon the temperature of thermistor 25 and hence upon the temperature of air passing through the exhaust air conduit 13.

The junction point 42 is connected to a first input terminal on each of first and second operational amplifiers 43 and 44. A second input terminal on the first operational amplifier 43 is connected to the wiper arm of a first variable resistor 45 which is connected across the positive and negative output terminals 39 and 40 of the transformer- rectifier unit 38. Similarly, a second input terminal on the second operational amplifier 44 is connected to the wiper arm of a second variable resistor 46 which is also connected across the positive and negative output terminals 39 and 40.

The output terminal of the first operational amplifier 43 is connected to the first relay 33 via a first zener diode 47, and the output terminal of the second operational amplifier 44 is connected to the second relay 35 via a second zener diode 48. The zener diodes 47 and 48 are conveniently 3 volt, 400 milliwatt zener diodes and serve to ensure that the first and second relays 33 and 35 release when the outputs of the first and second operation amplifiers 43 and 44 go "low".

First and second feedback resistors 49 and 50 are connected between the output terminal and the second input terminal of the respective first and second operational amplifiers 43 and 44. The first and second feedback resistors 49 and 50 are conveniently 820 Kilohm, $\frac{1}{2}$ watt 5% carbon film resistors and serve to provide positive feedback, and, by a regenerative switching action, to ensure that the first and second relays 33 and 35 operate in both directions without chatter.

Power is supplied to the first and second relays 33 and 35 via direct connections to the positive and negative output terminals 39 and 40 of the transformer-rectifier unit 38. As those skilled in the art will appreciate, the first predetermined value of temperature of the exhaust air passing the thermistor 25 is determined by the position of the wiper arm of the second variable resistor 46. As the temperature rises, the resistance of the thermistor 25 falls and the voltage at the junction point 42 drops.

If the temperature rises above the first predetermined value, the voltage at the junction point 42 falls below the voltage on the wiper arm of the second variable resistor 46, causing the second operational amplifier 44 to energise the second relay 35. As mentioned above, when the second relay 35 is energised the mains contactor 28 is opened thereby switching off the motor 3, the heater 10, the fan 11, the damper means 12, and the solenoid-actuated on-off valve 23.

As the temperature again falls below the first predetermined value, the voltage at the junction point 42 rises above the voltage on the wiper arm of the second variable resistor 46 causing the second operational amplifier 44 to deenergise the second relay 35. However, because the mains contactor 28 is open, it is necessary to close the switch 36 in order to cause the mains contactor 28 once more to close and thereby to switch on the motor 3, the heater 10, the fan 11, the damper means 12 and the solenoid-actuated on-off valve 23.

Similarly the second predetermined value of temperature of the exhaust air passing the thermistor 25 is determined by the position of the wiper arm of the first variable resistor 45. If the temperature drops below the second predetermined value, the voltage at the junction point 42 rises above the voltage on the wiper arm of the first variable resistor 45, causing the first operational amplifier 43 to deenergise the first relay 33. Denergisation of the first relay 33 switches off the solenoid-actuated on-off valve 23.

As the temperature rises above the second predetermined value, the voltage at the junction point 42 falls below the voltage on the wiper arm of the first variable resistor 45, causing the first operational amplifier 43 again to energise the first relay 33, thereby switching on the solenoid-actuated on-off valve 23.

Instead of a Radiospares Thermistor Probe 151—120, the thermistor 25 may be a miniature bead thermistor if a faster response to temperature changes is desired.

Calibration of the control means 26 enables temperature scales to be provided for the first and second variable resistors 45 and 46 thereby allowing straightforward selection of the first and second predetermined values by suitable positioning of the respective wiper arms relative to the respective temperature scales.

Advantageously, first and second audio-visual warning means are connected respectively to the first relay 33 and the second relay 35 to indicate by warning lights and alarms such as a buzzer or bell whether the temperature of the exhaust air passing the thermistor 25 has exceeded the first predetermined value or has fallen below the second predetermined value.

The temperature of the exhaust air passing the thermistor 25 may be measured by monitoring the potential difference between the junction point 42 and the negative output terminal 40, or alternatively, a separate temperature measuring device, which may be a second thermistor, may be mounted in the exhaust air conduit 13 adjacent the thermistor 25.

An increase in temperature of the exhaust air passing the thermistor 25 to a temperature above the first predetermined valve can occur as a result of one or more of several faults. These faults include for example:—

blockages in the supply and/or return lines 19 and 20,

exhaustion of spray solution in the reservoir 18,

failure of the air supply via air line 21,

faulty operation of the needle valve in the spray gun 17,

spraying rate set too low,

faulty operation of the damper means 12 and/or fan 11 causing too high a volume of inlet air to pass to the drum 1,

faulty operation of the heater 10 causing the temperature of the inlet air to be too high, and

failure of the motor 3.

Faults which can cause a decrease in temperature of the exhaust air passing the thermistor 25 to a temperature below the second predetermined valve include, for example, the following:

failure of the exhauster 15,

faulty operation of the damper means 12 and/or fan 11 causing too low a volume of inlet air to pass to the drum 1,

failure of the heater 10,

faulty operation of the heater 10 causing the temperature of the inlet air to be too low,

faulty operation of the spray gun 17 resulting in excessively high spraying rate, and

spraying rate set too high.

It will be appreciated that the apparatus of the invention can form part of a fully automatic system and for instance the mechanisms intended to overcome malfunctions of the apparatus can also be put to deliberate use. For example the apparatus can include means for supplying a set quantity of coating fluid to the applicator so that when the set quantity of fluid is exhausted rise in temperature above the first predetermined temperature stops the process. Thus by fixing the quantity and rate of application of liquid to be applied the duration of the overall coating cycle can be controlled.

As indicated above, when the temperature falls below the second predetermined value and the applicator has been shut down, continued rotation of the tablet receiving surface and supply of air eventually causes rise in temperature above the second predetermined value and the applicator is re-energised to renew the supply of coating fluid, thus providing a self-correcting mechanism in a continuous process. If desired the control means can incorporate a time lapse mechanism by which supply of fluid from the applicator is not renewed until the temperature has risen a set amount above the second predetermined value, in order to avoid problems that might otherwise arise from constant shutdown and renewal of the applicator.

The mode of operation of the apparatus described with reference to the accompanying drawings will be further understood from the following Examples:

### Example 1

A 10 kg batch of tablets was being coated in the apparatus with an aqueous solution containing 7% w/w of hydroxypropyl methyl cellulose (15 cps grade) and 2% w/w of glycerin. The mean temperature of the exhaust air was 45°C and the first and second predetermined temperatures were 47.5°C and 43°C respectively. The spray gun blocked and within 20 seconds the temperature rose to 49°C, the control means 26 operated to switch off the motor 3, the heater 10, fan 11 and the damper means 12 and to shut down the spray gun 17 via the solenoid-actuated on-off valve 23. No harm resulted to the tablets.

### Example 2

A 10 kg batch of tablets was being coated with an aqueous solution containing 7% w/w of hydroxypropyl methyl cellulose (15 cps grade) and 2% w/w of glycerin. The mean temperature of the exhaust air was 40°C and the first and second predetermined temperatures were 42.5°C and 38°C respectively. A spray gun fault developed resulting in the excessively high rate of delivery of spray solution. Within 20 seconds the temperature fell to 37°C. The control means 26 operated to shut down the spray gun 7 via the solenoid-actuated on-off valve 23, and no harm resulted to the tablets.

### Example 3

A 10 kg batch of tablets was being coated with an aqueous solution of methyl cellulose having a viscosity of 15 centipoises. The mean temperature of the exhaust air was 50°C and the first and second predetermined temperatures were 51°C and 48°C. The fan 11 failed and within 20 seconds the temperature fell to 46°C. The control means 26 operated to shut down the spray gun 17 via the solenoid-actuated on-off valve 23, and no harm resulted to the tablets.

### Example 4

Tablets were being coated as in Example 3 when the exhauster 15 failed. The temperature dropped below the second predetermined value and the spray gun 17 was shut down as in Example 3 with no harm resulting to the tablets.

### Example 5

Tablets were being coated as in Example 3 when the heater 10 failed. Within 40 seconds the temperature fell to 46.5°C. The control means 26 operated to shut down the spray gun 17 as in Example 3 and no harm resulted to the tablets.

### Example 6

Tablets were being coated as in Example 3. A thermostat fault developed in the heater 10 which caused a rise in temperature from the mean value through 2.5°C within 20 seconds. The control means 26 operated to switch off the motor 3, the heater 10, the fan 11 and the damper means 12 and to shut down the spray gun 17 via the solenoid-actuated on-off valve 23. No harm resulted to the tablets.

## Claims

1. An apparatus for coating tablets and other materials in similar physical form comprising a rotatable tablet receiving surface (1), rotary driving means (3, 4) coupled to the tablet receiving, surface, an applicator (17) for supply of coating fluid to the tablets, applicator shutdown means (21, 22, 23), an air conduit (2, 9) for supplying air to the tablets, air control means (11, 12) for regulating the supply of air, the arrangement of the air conduit and tablet receiving surface being such that in operation of the apparatus air passes from the air conduit through a bed of tablets (16) on the tablet receiving surface, temperature sensing means (25) in the path of the exhaust air control means (26) connected to the temperature sensing means, the rotary driving means, the air control means and the applicator shutdown means, for shutting off the supply of air to the rotatable tablet receiving surface, causing the rotary driving means to cease to rotate the tablet receiving surface and causing the applicator shutdown means to shut down the applicator whenever the temperature detected by the temperature sensing means exceeds a first predetermined value in operation of the apparatus and for causing the applicator shutdown means to shut down the applicator whenever the temperature detected by the temperature sensing means falls below a second predetermined value in operation of the apparatus.

2. A tablet coating apparatus according to claim 1, wherein the tablet receiving surface (1) is a drum, the applicator (17) comprises at least one spray gun, and there is an exhaust air conduit (13) and an exhauster (15) for withdrawing exhaust air from the drum through the exhaust air conduit, the arrangement of the air inlet conduit, the exhaust air conduit and the drum being such that in operation of the apparatus air passes from the air inlet conduit to the exhaust air conduit through the bed of tablets within the drum.

3. A tablet coating apparatus according to either of Claims 1 and 2 wherein the temperature sensing means comprises a single temperature sensor.

4. A tablet coating apparatus according to any of the preceding claims wherein the single temperature sensor is a thermistor.

**Revendications**

1. Appareil pour l'enrobage de comprimés et d'autres matières d'une forme physique semblable, cet appareil comprenant une surface rotative de réception de comprimés (1), un moyen d'entraînement rotatif (3, 4) couplé à cette surface de réception de comprimés, un applicateur (17) destiné à appliquer un fluide d'enrobage aux comprimés, un moyen de mise hors service (21, 22, 23) de cet applicateur, un conduit d'air (2, 9) destiné à acheminer de l'air aux comprimés, un moyen (11, 12) pour régler l'alimentation d'air, le conduit d'air et la surface de réception de comprimés étant disposés de telle sorte que, lors de la mise en service de l'appareil, l'air sortant de ce conduit circule à travers un lit de comprimés (16) se trouvant sur la surface de réception, un moyen de détection de température (25) situé dans le parcours de l'air d'échappement, ainsi qu'un moyen de commande (26) raccordé au moyen de détection de température, au moyen d'entraînement rotatif, au moyen de réglage de débit d'air et au moyen de mise hors service de l'applicateur en vue d'interrompre l'alimentation d'air vers la surface rotative de réception de comprimés, amenant ainsi le moyen d'entraînement rotatif à cesser de faire tourner la surface de réception de comprimés et le moyen de mise hors service de l'applicateur, à arrêter le fonctionnement de celui-ci chaque fois que la température détectée par le moyen prévu à cet effet dépasse une première valeur prédéterminée au cours de la mise en service de l'appareil, ce moyen de mise hors service de l'applicateur arrêtant également le fonctionnement de ce dernier chaque fois que la température détectée par le moyen prévu à cet effet tombe en dessous d'une seconde valeur prédéterminée au cours de la mise en service de l'appareil.

2. Appareil d'enrobage de comprimés suivant la revendication 1, caractérisé en ce que la surface de réception de comprimés (1) est un tambour, l'applicateur (17) comprend au moins un pistolet de pulvérisation, tandis que l'on prévoit un conduit d'air d'échappement (13) et un aspirateur (15) pour aspirer l'air d'échappement du tambour à travers ce conduit, le conduit d'entrée d'air, le conduit d'air d'échappement et le tambour étant disposés de telle sorte que, lors de la mise en service de l'appareil, l'air circule du conduit d'entrée d'air vers le conduit d'air d'échappement en passant à travers le lit de comprimés se trouvant à l'intérieur du tambour.

3. Appareil d'enrobage de comprimés suivant l'une quelconque des revendications 1 et 2, caractérisé en ce que le moyen de détection de température comprend un seul capteur de température.

4. Appareil d'enrobage de comprimés suivant l'une quelconque des revendications 1 à 3, caractérisé en ce que l'unique capteur de température est un thermistor.

**Patentansprüche**

1. Vorrichtung zum Überziehen von Tabletten und anderen Materialien von ähnlicher äußerer Form, gekennzeichnet durch eine drehbare Oberfläche zur Aufnahme der Tabletten (1), einen mit der Oberfläche zur Aufnahme der Tabletten gekoppelten Drehantrieb (3, 4), einen Applikator (17) für die Zufuhr von Überzugsflüssigkeit zu den Tabletten, eine Abschaltvorrichtung für den Applikator (21, 22, 23), eine Luftleitung (2, 9) für die Luftzufuhr zu den Tabletten, eine Luftkontrollvorrichtung (11, 12) zur Steuerung der Luft-zufuhr, wobei die Anordnung der Luftleitung und der die Tabletten aufnehmenden Oberfläche so ist, daß bei Betrieb der Vorrichtung Luft aus der Luftleitung durch ein Bett aus Tabletten (16) auf die die Tabletten aufnehmende Oberfläche strömt eine Vorrichtung zur Temperaturmessung (25) in der Abluftführung und eine Kontrollvorrichtung (26), welche mit der Vorrichtung zur Temperaturmessung, dem Drehantrieb, der Luftkontrollvorrichtung und der Abschaltvorrichtung für den Applikator verbunden ist, zum Abschalten der Luft-zufuhr zu der drehbaren, die Tabletten aufnehmenden Oberfläche, zur Einwirkung auf den Drehantrieb, daß dieser aufhört, die die Tabletten aufnehmende Oberfläche zu drehen, und zur Einwirkung auf die Abschaltvorrichtung für den Applikator, daß diese den Applikator abstellt, sooft die von der Vorrichtung zur Temperaturmessung festgestellte Temperatur einen ersten vorbestimmten Wert bei Betrieb der Vorrichtung übersteigt und zur Einwirkung auf die Abschaltvorrichtung für den Applikator, daß diese den Applikator abstellt, sooft die von der Vorrichtung zur Temperaturmessung festgestellte Temperatur einen zweiten vorbestimmten Wert bei Betrieb der Vorrichtung unterschreitet.

2. Vorrichtung zum Überziehen von Tabletten gemäß Anspruch 1, dadurch gekennzeichnet, daß die die Tabletten aufnehmende Oberfläche (1) eine Trommel ist, der Applikator (17) wenigstens eine Spritzpistole umfaßt und eine Abluftleitung (13) und ein Sauggebläse (15) zum Abziehen der Abluft aus der Trommel durch die Abluftleitung vorhanden ist, wobei die Anordnung der Zuluftleitung, der Abluftleitung und der Trommel so ist, daß bei Betrieb der Vorrichtung Luft durch die Zuluftleitung in die Abluftleitung durch das Bett aus Tabletten innerhalb der Trommel strömt.

3. Vorrichtung zum Überziehen von Tabletten nach jedem der Ansprüche 1 und 2, dadurch gekennzeichnet, daß die Vorrichtung zur Temperaturmessung einen einzelnen Temperaturfühler umfaßt.

4. Vorrichtung zum Überziehen von Tabletten nach jedem der vorstehenden Ansprüche, dadurch gekennzeichnet, daß der einzelne Temperaturfühler ein Thermistor ist.

Fig. 1.

Fig.2.

2

Fig. 3.